# EUROPEAN PATENT APPLICATION

(11) **EP 1 057 573 A2**
(43) Date of publication of application: **06.12.2000**
(21) Application number: 00304379.1
(22) Date of filing: 24.05.2000
(51) Int. Cl.: B23K 20/12

(54) **A method of mending a friction stir joint**

(30) Priority: 26.05.1999 JP 14575999
(71) Applicant: Hitachi, Ltd., Chiyoda-ku, Tokyo 101-8010 (JP)
(72) Inventor: Ezumi, Masakuni, Kudamatsu-shi, Yamaguchi 744-0002 (JP); Fukuyori, Kazusige, Kudamatsu-shi, Yamaguchi 744-0031 (JP); Satou, Akihiro, Hitachi-shi, Ibaraki 316-0006 (JP)
(74) Representative: Paget, Hugh Charles Edward

(57) **Abstract**

A method of mending a friction stir joint between members (20, 30) formed of an aluminium alloy, the joint having a joining bead (50) formed by friction stir joining, comprising the steps of
(i) forming a mending zone by removing a defect in said joining bead (50) by grinding, and
(ii) forming a mending bead at said mending zone by TIG welding using a welding rod which is made of the same aluminium alloy as said members (20, 30).

## Description

### Field of the Invention

The present invention relates to a method of mending a friction stir joint and in particularly to mending of a friction stir joint of members which employ an aluminum alloy material as a base member.

### Background of the Invention

In the known technique of friction stir joining, also known as friction stir welding, the joint is formed by rotating a round rod (called a rotary tool) which is inserted into a joining portion of two members to be subjected to a friction stir joining, such as aluminum alloy extruded frame members, and moving the rotary tool along a joining line of the two members. The friction stir joining portion of the two members is thus heated, softened and plastically fluidized. The rotary tool has a small diameter portion which is inserted into the friction stir joining portion of the two members and a large diameter portion which is adjacent and coaxial with the small diameter portion. The boundary or shoulder between the small diameter portion and the large diameter portion of the rotary tool is inserted a little way into the friction stir joining portion of the two members. The rotary tool is inclined towards the rear with respect to its advancing direction during joining of the two members.

When friction stir joining is carried out on two extruded frame members, a raised bead is formed at a surface of the side of the extruded frame members at which the rotary tool is inserted. For this reason, at the friction stir joining portion of the two extruded frame members the plate thickness of the extruded frame members becomes reduced. To prevent this, at an end portion of some or both extruded frame member to be subjected to friction stir joining, a raised portion or rib which projects toward the rotary tool is previously provided, and with this raised portion present the friction stir joining is carried on the two extruded frame members.

Alternatively, in place of this raised portion to the extruded frame member, a third plate is arranged on the two extruded frame members and the friction stir joining is carried out on the two extruded frame members and the third plate.

In friction stir joining of hollow frame members, a supporting cross-member which is orthogonal to a face plate of the hollow frame member may be provided integrally and then bending of the face plate of the hollow frame member by the force of the friction stir joining can be prevented.

These techniques are disclosed in EP-A-0797043.

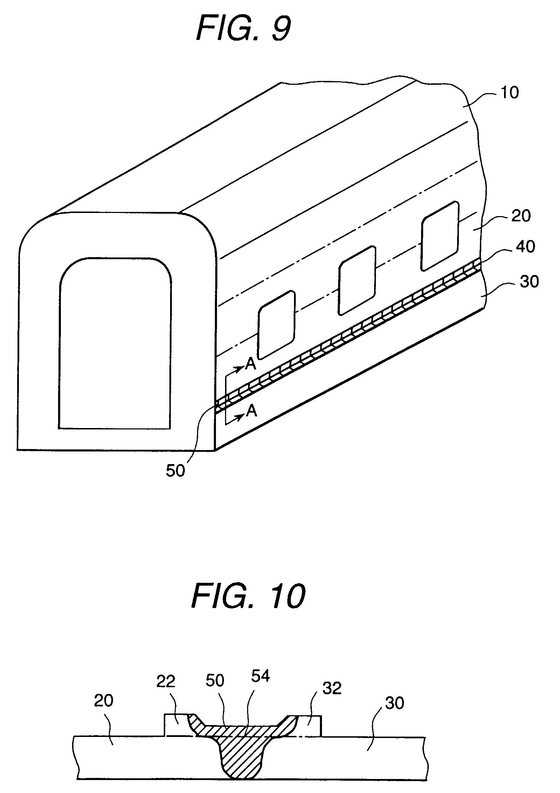

Fig. 9 of the present application shows a technique for joining a side structure of a railway car 10 by friction stir joining. In the side structure of the railway car 10, extruded frame members 20 and 30 (a first extruded frame member 20 and a second extruded frame member 30) are employed. Such extruded frame members 20 and 30 are manufactured by extruding and molding, for example, aluminum alloy (A6N01 material) and are joined at respective side edge portions along a joining line 40 of the extruded frame members 20, 30 by friction stir joining. A joining bead 50 (Fig. 10) is formed between the first and second extruded frame members 20, 30. The members have raised portions or ribs 22,32 at their edges where the joint is formed.

As the extruded material, the above stated A6N01 material is used as a railway car material, since a complicated cross-sectional shape of the large thin hollow frame member can be obtained, with high anti-corrosion performance and a good welding performance. The chemical composition of the A6N01 material is 0.40-0.9% Si, less than 0.35% Fe, less than 0.35% Cu, less than 0.50% Mn, 0.40-0.8% Mg, less than 0.3% Cr, less than 0.25% Zn, less than 0.10% Ti, balance Al and inevitable impurities. This material has the standard no. H4100 in the JIS standard for aluminum and aluminum alloy extruded frame members.

Next, the joining bead 50 of the first extruded frame member 20 and the second extruded frame member 30 is inspected. If there is no defect it can be left as it is. When a defect is discovered in the joining bead 50, by mending of the defect on the joining bead 50 and, by a hairline processing etc., a surface of the extruded frame members 20, 30 having a good appearance can be obtained.

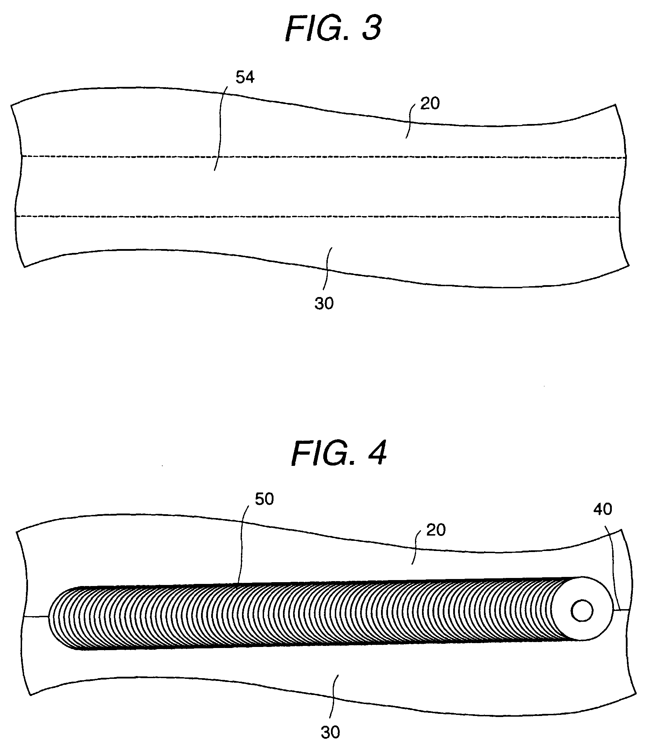

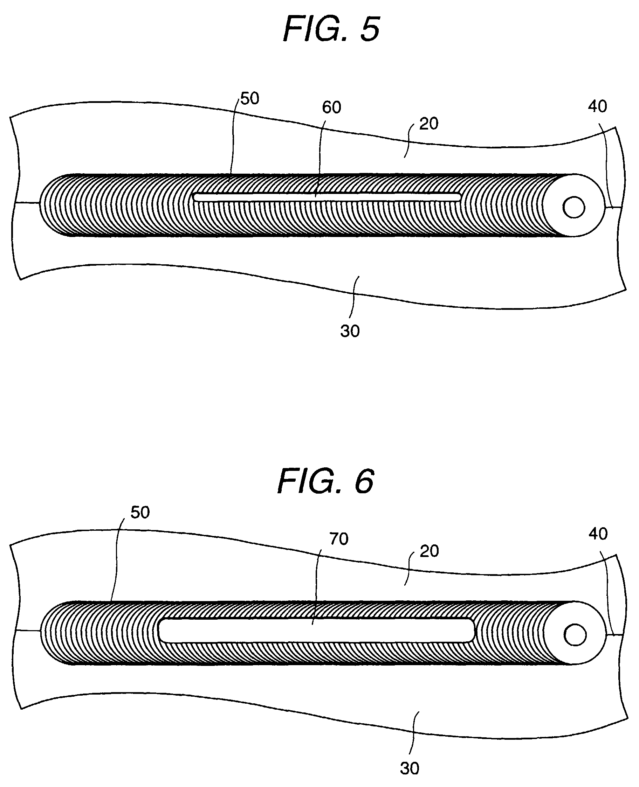

Fig. 4 shows a state in which the friction stir joining is performed along to the joining line 40 of the extruded frame members 20, 30 to form the joining bead 50 between them. This joining bead 50 is inspected, for example, by an ultrasonic defect inspection process. A defect 60 shown in Fig. 5 may be discovered in the joining bead 50.

In Figs. 1 to 7 (except for Fig. 3), lines showing the edges of the raised portions 22,32 are omitted, for simplicity. Fig. 6 and Fig. 7 show a conventional mending process of a defect 60 which is discovered on the joining bead 50.

When the extruded frame members 20, 30 are manufactured using A6N01 material, the joining bead 50, which is formed by the friction stir joining is also comprised of the same A6N01 material.

To remove a defect in this joining bead 50, a part including this defect portion is processed using a tool such as a grinder and a mending zone 70 is formed. Next, MIG welding (metal inert gas welding) is performed and a mending bead 80 is formed. In MIG welding, a welding wire suited to MIG welding is used. As a material of this welding wire, the material having the A5356 composition is used (no. Z3232 of JIS standard for aluminum and aluminum alloy welding rod and wire).

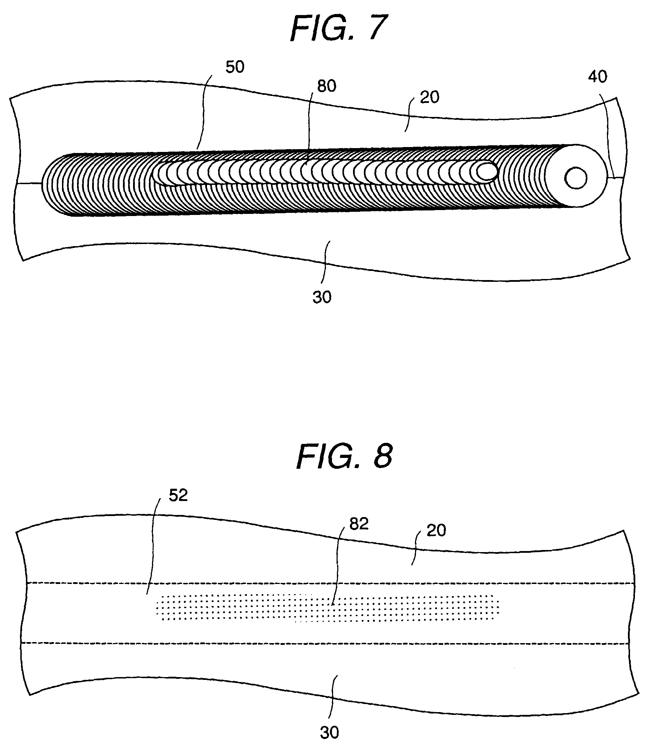

Fig. 8 shows a state in which at the joining portion including the mended joining bead 50 a hairline processing 52 is performed. Hairline processing is a finishing process, known in this field. Desirably, the hairline processing 52 provides a surface which is highly homogeneous with respect to the surfaces of the first and second extruded frame members so that even when unpainted the surface can be used as the side structure of the railway car 10.

When the hairline processing 52 is performed on the joining bead 50 which has been mended using MIG welding, the surface of a mended portion 82 shown in Fig. 8 exhibits a different appearance relative to the surface of the periphery of the mended portion 82. Because of this outer appearance of the mended portion, when the side structure of the railway car 10 is left unpainted, there is a problem of an unattractive appearance.

### Summary of the Invention

An object of the present invention is to provide a method of mending a friction stir joint in which the above stated problems can be solved.

Another object of the present invention is to provide a method of mending a friction stir joint by which a defect of the friction stir joint can be removed.

A further object of the present invention is to provide a method of mending a friction stir joint by which a defect of a joining bead of the friction stir joint of two members subjected to friction stir joining can be removed.

A mending method of a friction stir joining portion according to the present invention which is formed by using a friction stir joining comprises a step of forming a mending zone by removing a defect which is included in a joining bead according to a grinding processing, and a step of forming a mending bead in the formed mending zone according to TIG welding (tungsten inert gas welding) using a welding rod which is the same material to the base member.

Further, a mending method of a friction stir joining portion according to the present invention further includes a step of performing a hairline processing to a joining portion which includes the mending bead and the joining bead.

### Brief Description of the Drawings

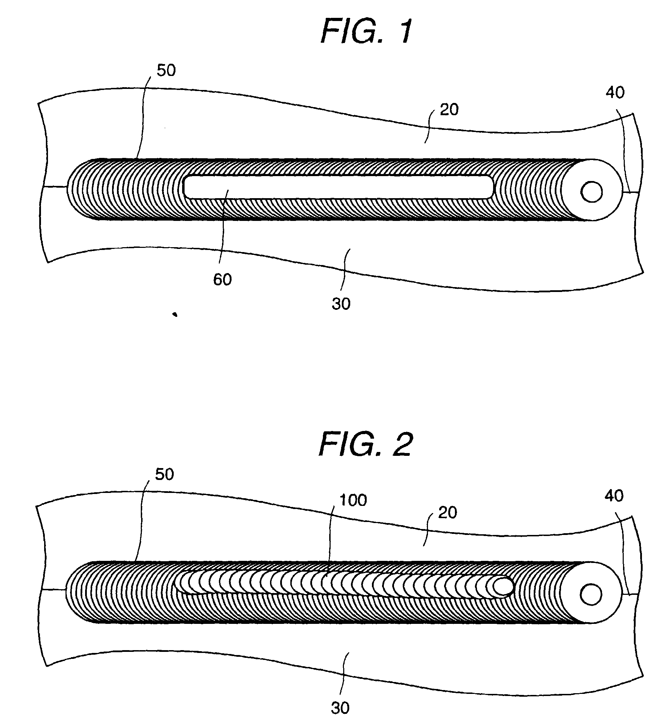

Embodiments of the invention will now be described by way of non-limitative example, with reference to the accompanying drawings, in which:-
Fig. 1 is a diagrammatic view showing a mending process of a friction stir joint in one embodiment according to the present invention;
Fig. 2 is a diagrammatic view showing a mending process of a friction stir joint in another embodiment according to the present invention;
Fig. 3 is a diagrammatic view showing a mending process of a friction stir joint in another embodiment according to the present invention;
Fig. 4 is a diagrammatic view of a friction stir joint;
Fig. 5 is a diagrammatic view showing a defect of a friction stir joint;
Fig. 6 shows diagrammatically a mending process of a friction stir joint according to the prior art;
Fig. 7 is another view of the mending process of Fig. 6;
Fig. 8 also shows a mending process of a friction stir joint according to the prior art;
Fig. 9 is a diagrammatic view showing a manufacture of a side structure of a railway car, using friction stir joining; and
Fig. 10 is a cross-sectional view on line A-A of Fig. 9.

### Description of the Embodiments

In Fig. 1 and Fig. 2 friction stir joining has been performed at a joining line 40 of a first extruded frame member 20 an a second extruded frame member 30, which are part of a side structure of a railway car 10, and a joining bead 50 is formed at the joining line 40. Fig. 9 discussed above shows how the members 20 and 30 are part of a side structure of a railway car 10. The cross-sectional view of Fig. 10 shows how side end portions of the first and second extruded frame members 20, 30 with respective pre-formed raised portions 22, 32 are abutted, and then the joining bead 50 is formed by the friction stir joining.

When the sides of the members 20, 30 having the raised portion 22, 32 are used as an outer face of the railway car 10, the raised joint portion is made into a flat face 54 by grinding, etc. However, when an opposite face of the joint is formed at the outer side of the railway car 10, the raised joint portion may be left as it is.

The joining bead 50 is formed of the same A6N01 material which is the base material of the extruded frame members 20, 30. After its formation the bead 50 is inspected. This inspection of the joining bead 50 can be carried out either with the raised portions 22, 32 remaining or after these raised portions have been removed.

If by the inspection of the joining bead 50, a defect such as a broken portion or a pit etc. on the joining bead 50 is discovered, the periphery of the joining bead 50 including the defect is removed e.g. by grinding using a grinder, and then a mending zone 70 is formed.

Next, as shown in Fig. 2, at the mending zone 70 a mending bead 100 is formed by TIG welding (tungsten inert gas welding). Namely, a butt welding is carried out on the mending zone 70.

When this TIG welding is carried out, a welding rod made of A6N01 material similar to the base member is prepared and used. This TIG welding rod made of A6N01 material may be made by cutting off a redundant portion of one of the extruded frame members 20, 30.

In accordance with this TIG welding, the joining bead 50 and the mending bead 100 are formed using the same material. In TIG welding, since the material of an electrode (tungsten electrode or tungsten alloy electrode) and a material of the welding rod differ from each other, welding rod having the same material as the members 20, 30 can be employed.

Then, if necessary the raised portions 22, 32 are removed e.g. by cutting or grinding, and at the face of the raised portion side a hairline processing is carried out.

As a result, at the hairline processed portion 54 shown in Fig. 3 which has been obtained by performing the hairline processing at the joining bead portion, the traces or the marks of the mending bead 100 are not left. Accordingly the surface of the extruded frame members 20 has a high quality, and a railway car 10 having a good appearance even when unpainted can be obtained.

With the extruded frame members made of A6N01 material, when MIG welding is carried out, a welding wire made of AA5356 material is used. This combination is recommended by the welding wire makers. The above stated combination is best from the aspects of the welding strength.

As to the combination of the frame member made of A6N01 material with the welding wire made of A6N01 material, the welding wire made of A6N01 material is not put on the market. Further, the combination of the frame member made of A6N01 material with the welding wire made of A6N01 material has not been proposed from the aspects of the welding strength and the welding performance.

As mentioned, within the present invention, a redundant part of a member made of A6N01 material is cut off and it is used as the welding rod, but welding rod may be provided in another manner. Further, the inspection and the mending of the joining bead 50 may be carried out after the removal of the raised portions 22, 32 according to circumstances.

In the extruded frame members 20, 30, when the joining portions are formed at both faces, the above stated TIG welding is used for the mending of the outer face in which the hairline processing is carried out. In the case of the mending of the inner face side, MIG welding is employed using the welding wire made of conventional AA5356 material.

As shown in Fig. 10, when the friction stir joining is carried out by approaching a tip end of the small diameter portion of the rotary tool to a support bed, the face at the lower side of the frame members 20, 30 is finished smoothly. This face may become the outer face of the railway car 10, at which the hairline processing is carried out.

When the mending of the joining bead 50 is carried out from the lower face side of Fig. 10, the mending can be carried out using the above stated TIG welding. After the TIG welding, the mending bead 100 is cut off by the grinding and is made smooth.

As stated above, according to the present invention, when a structural member or body such as an aluminum body railway car is constituted by joining hollow extruded frame members formed of aluminum alloy material, and when a defect of the joining bead made by the friction stir joining is mended, the defect portion is removed by the grinding etc. and the mending zone is formed, this mending zone is repaired using the welding rod having the same material with the frame member, so that a mending bead is formed by TIG welding.

Since the joining bead according to the friction stir joining and the mending bead are formed of the same material, when the hairline processing is performed at the joining bead, the visible traces of the mending bead are not left, and a joint surface having good appearance can be obtained.

Accordingly, the railway car body can be left without painting, and a body having a light weight structure and suited to recycling can be obtained.

## Claims

1. A method of mending a friction stir joint between members (20, 30) formed of an aluminium alloy, the joint having a joining bead (50) formed by friction stir joining, comprising the steps of
(i) forming a mending zone by removing a defect in said joining bead (50) by grinding, and
(ii) forming a mending bead at said mending zone by TIG welding using a welding rod which is made of the same aluminium alloy as said members (20, 30).

2. A method according to claim 1, which includes a further step of performing hairline processing of said mending bead and joining bead at the region of the mending.

3. A method according to claim 1 or 2, wherein said members (20, 30) are frame members.

4. A method according to claim 3, wherein said frame members (20, 30) are extruded frame members and said aluminium alloy is A6N01.
